# EUROPEAN PATENT SPECIFICATION

(11) **EP 4 169 736 B1**
(45) Date of publication and mention of the grant of the patent: **27.11.2024**
(21) Application number: 21826304.4
(22) Date of filing: 22.02.2021
(51) Int. Cl.: B60C 1/00, C08K 5/24, C08K 5/3412, C08L 7/00, C08K 3/04, C08K 5/25, C08K 5/3415, C08K 3/22

(54) **RUBBER COMPOSITION AND TIRE**
KAUTSCHUKZUSAMMENSETZUNG UND REIFEN
COMPOSITION DE CAOUTCHOUC ET PNEUMATIQUE

(30) Priority: 18.06.2020 JP 2020105629
(43) Date of publication of application: 26.04.2023
(73) Proprietor: BRIDGESTONE CORPORATION, Chuo-ku Tokyo 104-8340 (JP)
(72) Inventor: TAJIKA, Yusuke, Tokyo 104-8340 (JP)
(74) Representative: Marks & Clerk LLP
(86) International application number: PCT/JP2021/006687
(87) International publication number: WO 2021/256007

(56) References cited:
- EP-A1- 2 977 401
- JP-A- 2001 049 047
- JP-A- 2001 172 431
- JP-A- 2002 146 110
- JP-A- 2002 194 139
- JP-A- 2004 217 726

## Description

### TECHNICAL FIELD

This disclosure relates to a rubber composition and a tire.

### BACKGROUND

Tires used in automobiles are required to have low heat generation and low rolling resistance from the viewpoint of fuel efficiency, and they are also required to be able to rotate at high speed without causing trouble.

Examples of means to meet these requirements include increasing the particle size of carbon black in rubber compositions used as tire materials, and improving the dispersibility of carbon black using a carbon dispersing agent. However, although increasing the particle size of carbon black contributes to low heat generating properties, it deteriorates the mechanical properties of a tire. Further, although using a carbon dispersing agent can achieve both low heat generating properties and high strength an early stage, it may cause heat aging, which is a side effect of carbon dispersing agent, and deteriorate the breaking strength (deteriorate the heat aging resistance) in a tire that has been used for a long time.

Blending a bismaleimide compound or a hydrazide compound in a rubber composition is known as a technique for achieving both low heat generating properties and high strength.

For example, JP 2001-172431 A (PTL 1) and JP 2002-121326 A (PTL 2) describe using a rubber composition, which contains a rubber component and a specific bismaleimide compound or hydrazide compound, in a pneumatic tire to achieve both high elastic modulus and low rolling resistance.

Further, JP 2001-213112 A (PTL 3) describes using a rubber composition, which contains a rubber component, a reinforcing filler, and a specific hydrazide compound, in a tire to suppress a decrease in elastic modulus caused by reversion due to over-vulcanization while maintaining sufficiently low heat generating properties.

Furthermore, JP 2002-146110 A (PTL 4) describes using a rubber composition, which contains a hydrazone compound with a specific structure and 1,6-hexamethylene-sodium diothiosulfate/dihydrate, in a tire to improve creep resistance and crack growth resistance while maintaining low heat generating properties.

### CITATION LIST

### Patent Literature

PTL 1: JP 2001-172431 A
PTL 2: JP 2002-121326 A
PTL 3: JP 2001-213112 A
PTL 4: JP 2002-146110 A

### SUMMARY

### (Technical Problem)

However, in all of the techniques describes in PTLS 1 to 4, it is difficult to achieve both low heat generating properties and other properties, such as high elastic modulus properties and crack growth resistance, at a high level, and it is particularly desired to further improve the low heat generating properties.

It could thus be helpful to provide a rubber composition that has high elastic modulus and excellent crack growth resistance while achieving low heat generating properties. Further, it could be helpful to provide a tire with high elastic modulus, excellent crack growth resistance, and reduced rolling resistance.

### (Solution to Problem)

We thus provide the following.

The rubber composition of the present disclosure is a rubber composition containing a rubber component, carbon black, a bismaleimide compound and a hydrazide compound, where
the bismaleimide compound is represented by the following general formula (I), and the content thereof is more than 0 parts by mass and less than 1 part by mass with respect to 100 parts by mass of the rubber component, 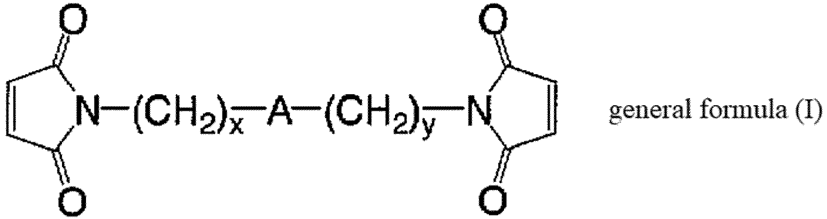 (in the general formula (I), A represents a divalent aromatic group having 6 to 18 carbon atoms or a divalent alkyl aromatic group having 7 to 24 carbon atoms, and x and y each independently represent an integer of 0 to 3),
the hydrazide compound is represented by the following general formula (II), and the content thereof is 0.5 parts by mass or more with respect to 100 parts by mass of the rubber component, 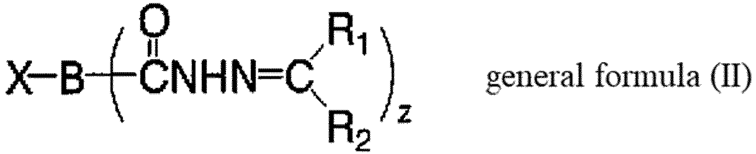 (in the general formula (II), B represents a polyvalent acyclic aliphatic group having 2 to 18 carbon atoms (the functional group may contain an aromatic group therein), a polyvalent cyclic aliphatic group having 5 to 20 carbon atoms, a polyvalent aromatic group having 6 to 18 carbon atoms, or a polyvalent alkyl aromatic group having 7 to 24 carbon atoms, where the functional group may contain at least one type of heteroatom selected from an oxygen atom, a nitrogen atom, and a sulfur atom; X represents a hydrogen atom, a hydroxy group, an amino group, or a mercapto group; R₁ and R₂ each independently represent a hydrogen atom, an alkyl group having 1 to 18 carbon atoms, a cycloalkyl group, or an aromatic ring, where the substituent may contain at least one type of heteroatom selected from an oxygen atom, a nitrogen atom, and a sulfur atom; and z represents an integer of 1 to 3), and
the carbon black has a nitrogen adsorption specific surface area (N₂SA) of less than 40 m²/g as measured with the method specified in JIS K 6217-2: 2017 and an oil absorption amount (COAN) of a compressed sample of 60 ml/100 g or more as measured with a method specified in JIS K 6217-4: 2017, and the content thereof is 35 parts by mass or more and less than 45 parts by mass with respect to 100 parts by mass of the rubber component.

In this case, it is possible to achieve both low heat generating properties, and high elastic modulus properties and crack growth resistance at a high level.

In the rubber composition of the present disclosure, the hydrazide compound is preferably 3-hydroxy-N'-(1,3-dimethylbutylidene)-2-naphthoic acid hydrazide. In this case, the low heat generating properties can be further enhanced, and the Mooney viscosity can also be improved.

In the rubber composition of the present disclosure, the bismaleimide compound is preferably at least one selected from N,N'-1,2-phenylene bismaleimide, N,N'-1,3-phenylene bismaleimide and N,N'-1,4-phenylene bismaleimide. In this case, the elastic modulus can be further increased, and the heat aging resistance can also be improved.

In the rubber composition of the present disclosure, the rubber component preferably contains 90 % by mass or more of natural rubber. In this case, the low heat generating properties, high elastic modulus properties, and crack growth resistance can be further improved.

In the rubber composition of the present disclosure, the rubber composition preferably contains no silica as a filler. In this case, the crack growth resistance and processability of the rubber composition can be further improved.

The rubber composition of the present disclosure preferably further contains zinc oxide (ZnO) in an amount of less than 5 parts by mass with respect to 100 parts by mass of the rubber component. In this case, the high elastic modulus properties and heat aging resistance can be further improved without deteriorating the crack growth resistance of the rubber composition.

In the tire of the present disclosure, the rubber composition is preferably used for at least one member selected from ply coating rubber, inter-ply rubber, belt coating rubber, inter-belt cushion rubber, belt end covering rubber, and stiffener rubber. In this case, the effects of improving high elastic modulus properties and crack growth resistance and reducing rolling resistance can be exhibited more effectively.

### (Advantageous Effect)

According to the present disclosure, it is possible to provide a rubber composition that has high elastic modulus and excellent crack growth resistance while achieving low heat generating properties. Further, according to the present disclosure, it is possible to provide a tire with high elastic modulus, excellent crack growth resistance, and reduced rolling resistance.

### DETAILED DESCRIPTION

The following explains and describes embodiments of the rubber composition and the tire of the present disclosure.

### <Rubber composition>

The rubber composition of the present disclosure contains a rubber component, carbon black, a bismaleimide compound, and a hydrazide compound.

In the present disclosure, the bismaleimide compound is represented by the following general formula (I), and the content thereof is more than 0 parts by mass and less than 1 part by mass with respect to 100 parts by mass of the rubber component. 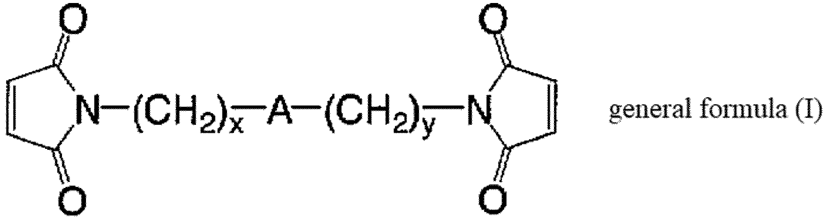 (In the general formula (I), A represents a divalent aromatic group having 6 to 18 carbon atoms or a divalent alkyl aromatic group having 7 to 24 carbon atoms, and x and y each independently represent an integer of 0 to 3.)

The hydrazide compound is represented by the following general formula (II), and the content thereof is 0.5 parts by mass or more with respect to 100 parts by mass of the rubber component. 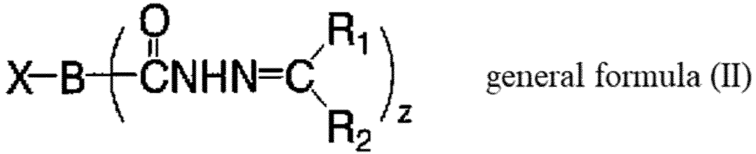 (In the general formula (II), B represents a polyvalent acyclic aliphatic group having 2 to 18 carbon atoms (the functional group may contain an aromatic group therein), a polyvalent cyclic aliphatic group having 5 to 20 carbon atoms, a polyvalent aromatic group having 6 to 18 carbon atoms, or a polyvalent alkyl aromatic group having 7 to 24 carbon atoms, where the functional group may contain at least one type of heteroatom selected from an oxygen atom, a nitrogen atom, and a sulfur atom; X represents a hydrogen atom, a hydroxy group, an amino group, or a mercapto group; R₁ and R₂ each independently represent a hydrogen atom, an alkyl group having 1 to 18 carbon atoms, a cycloalkyl group, or an aromatic ring, where the substituent may contain at least one type of heteroatom selected from an oxygen atom, a nitrogen atom, and a sulfur atom; and z represents an integer of 1 to 3.)

The carbon black has a nitrogen adsorption specific surface area (N₂SA) of less than 40 m²/g and an oil absorption amount (COAN) of a compressed sample of 60 ml/100 g or more, and the content thereof is 35 parts by mass or more and less than 45 parts by mass with respect to 100 parts by mass of the rubber component.

By using the bismaleimide compound represented by the general formula (I) in combination with the hydrazide compound represented by the general formula (II), the low heat generating properties and high e elastic modulus properties of the rubber composition of the present disclosure can be greatly improved, because the bismaleimide compound can increase the strength, elastic modulus, and heat resistance of the rubber composition, and the hydrazide compound can improve the low heat generating properties and the heat aging resistance. However, if the bismaleimide compound is contained in a large amount, the rubber may be cured, which may deteriorate the productivity and the low heat generating properties. Therefore, when the content of the bismaleimide compound in the rubber composition is less than 1 part by mass, the high elastic modulus properties and the crack growth resistance can be maintained at a high level while achieving low heat generating properties in a tire.

Further, because the rubber composition of the present disclosure uses carbon black whose nitrogen adsorption specific surface area (N₂SA) and oil absorption amount (COAN) of a compressed sample have been optimized, it is possible to further enhance the effect of improving low heat generating properties.

The following describes each component of the rubber composition of the present disclosure.

### (Rubber component)

The rubber component contained in the rubber composition of the present disclosure is not particularly limited. However, it preferably contains at least diene-based rubber from the viewpoint of obtaining excellent low-heat generating properties, crack growth resistance, and high-elastic modulus properties.

Examples of the diene-based rubber include natural rubber, polyisoprene rubber (IR), styrene-butadiene copolymer rubber (SBR), and polybutadiene rubber (BR). Among these, it is preferable to use natural rubber because better low-heat generating properties and crack growth resistance can be realized. From the same viewpoint, the content of natural rubber in the rubber component is preferably 80 % by mass or more, more preferably 90 % by mass or more, and particularly preferably 95 % by mass or more.

The diene-based rubber may be contained alone or may be contained in combination of two or more.

### (Bismaleimide compound)

The rubber composition for tire of the present disclosure contains a bismaleimide compound represented by the following general formula (I) in addition to the rubber component described above.

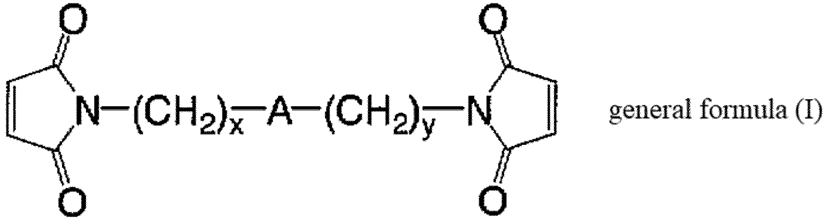

By containing the bismaleimide compound represented by the general formula (I) in the rubber composition of the present disclosure, the heat resistance, heat aging resistance, dynamic storage modulus (E') and other properties can be improved.

In the general formula (I), A represents a divalent aromatic group having 6 to 18 carbon atoms or a divalent alkyl aromatic group having 7 to 24 carbon atoms, and x and y each independently represent an integer of 0 to 3.

In the bismaleimide compound represented by the general formula (I), x and y are both integers of 0 to 3. If they are 4 or more, the molecular weight is too large, and the specified blending amount cannot provide the desired effects of improving the heat aging resistance, dynamic storage modulus and other properties, which is inconvenient.

Specific and preferable examples of the bismaleimide compound represented by the general formula (I) include N,N'-1,2-phenylenedimaleimide, N,N'-1,3-phenylenedimaleimide, N,N'-1,4-phenylenedimaleimide, N,N'-(4,4'-diphenylmethane) bismaleimide, 2,2-bis[4-(4-maleimidephenoxy)phenyl] propane, and bis(3-ethyl-5-methyl-4-maleimidephenyl] methane. These bismaleimide compounds may be blended alone or in combination of two or more.

Among these bismaleimide compounds, it is preferable to use N,N'-1,2-phenylenedimaleimide, N,N'-1,3-phenylenedimaleimide, and N,N'-1,4-phenylenedimaleimide, and N,N'-(4,4'-diphenylmethane) bismaleimide is particularly preferable because of its remarkable effects.

It is required that the content of the bismaleimide compound in the rubber composition of the present disclosure should be more than 0 parts by mass and less than 1 part by mass with respect to 100 parts by mass of the rubber component. This is because, when the content of the bismaleimide compound is less than 1 part by mass with respect to 100 parts by mass of the rubber component, it is possible to suppress excessive curing of the rubber composition and maintain a balance between low heat generating properties and crack growth resistance. From the same viewpoint, the content of the bismaleimide compound is preferably 1 part by mass or less with respect to 100 parts by mass of the rubber component.

Further, from the viewpoint of further improving heat resistance, heat aging resistance and dynamic storage modulus (E'), the content of the bismaleimide compound is preferably 0.5 parts by mass or more with respect to 100 parts by mass of the rubber component.

### (Hydrazide compound)

The rubber composition for tire of the present disclosure contains a hydrazide compound represented by the following general formula (II) in addition to the rubber component and the bismaleimide compound described above.

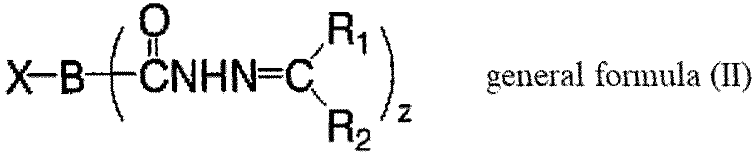

By containing the hydrazide compound represented by the general formula (II) in the rubber composition of the present disclosure, the dispersibility of carbon black, which will be described later, can be enhanced to improve the low heat generating properties, and deterioration of rubber physical properties in heat aging, which is caused by reversion or the like, can be prevented.

In the general formula (II), B represents a polyvalent acyclic aliphatic group having 2 to 18 carbon atoms (the functional group may contain an aromatic group therein), a polyvalent cyclic aliphatic group having 5 to 20 carbon atoms, a polyvalent aromatic group having 6 to 18 carbon atoms, or a polyvalent alkyl aromatic group having 7 to 24 carbon atoms, where the functional group may contain at least one type of heteroatom selected from an oxygen atom, a nitrogen atom, and a sulfur atom; X represents a hydrogen atom, a hydroxy group, an amino group, or a mercapto group; R₁ and R₂ each independently represent a hydrogen atom, an alkyl group having 1 to 18 carbon atoms, a cycloalkyl group, or an aromatic ring, where the substituent may contain at least one type of heteroatom selected from an oxygen atom, a nitrogen atom, and a sulfur atom; and z represents an integer of 1 to 3.

Specific and preferable examples of the hydrazide compound represented by the general formula (II) include a derivative of 3-hydroxy-2-naphthoic acid hydrazide (HNH), and derivatives of N'-(1,3-dimethylbutylidene) salicylic acid hydrazide (BMS), 4-hydroxybenzoic acid hydrazide, anthranilic acid hydrazide and 1-hydroxy-2-naphthoic acid hydrazide.

Examples of the derivative of 3-hydroxy-2-naphthoic acid hydrazide (HNH) include 3-hydroxy-2-naphthoic acid hydrazide such as 3-hydroxy-2-naphthoic acid (1-methylethylidene) hydrazide, 3-hydroxy-2-naphthoic acid (1-methylpropylidene) hydrazide, 3-hydroxy-2-naphthoic acid (1,3-dimethylpropylidene) hydrazide, and 3-hydroxy-2-naphthoic acid (1-phenylethylidene) hydrazide.

Among these hydrazide compounds, a derivative of 3-hydroxy-2-naphthoic acid hydrazide (for example, the product "HNH" manufactured by Otsuka Chemical Co., Ltd. corresponds to this compound) and a derivative of N'-(1,3-dimethylbutylidene) salicylic acid hydrazide (for example, the product "BMS" manufactured by Otsuka Chemical Co., Ltd. corresponds to this compound) are preferred because they can keep low Mooney viscosity while maintaining low heat generating properties.

Further, 3-hydroxy-N'-(1,3-dimethylbutylidene)-2-naphthoic acid hydrazide, which is a derivative of 3-hydroxy-2-naphthoic acid hydrazide ("HNH"), can be suitably used because of its remarkable effects.

The hydrazide compound represented by the general formula (II) has excellent reversion resistance and is particularly suitable for a rubber composition containing natural rubber as a rubber component, and its performance hardly deteriorates even under high-temperature vulcanization conditions. The hydrazide compound may be used alone or in combination of two or more.

Note that the hydrazide compound represented by the general formula (II) can be produced based on the method described in Pant, U.C.; Ramchandran, Reena; Joshi, B. C. Rev. Roum. Chim. (1979) 24 (3), 471-82.

It is required that the content of the hydrazide compound in the rubber composition of the present disclosure should be 0.5 parts by mass or more with respect to 100 parts by mass of the rubber component. This is because, when the content of the hydrazide compound is 0.5 parts by mass or more with respect to 100 parts by mass of the rubber component, the effect of improving the low heat generating properties and heat aging resistance of the rubber composition can be sufficiently obtained. Further, if the content of the hydrazide compound is too large, the low heat generating properties of the rubber composition may be deteriorated. Therefore, the content of the hydrazide compound is preferably 2 parts by mass or less with respect to 100 parts by mass of the rubber component.

### (Carbon black)

The rubber composition of the present disclosure contains carbon black in addition to the rubber component, the bismaleimide compound, and the hydrazide compound described above. By containing carbon black in the rubber composition, the reinforcing properties and elastic modulus of the rubber composition can be improved.

The carbon black has a nitrogen adsorption specific surface area (N₂SA) of less than 40 m²/g and an oil absorption amount (COAN) of a compressed sample of 60 ml/100 g or more. By reducing the nitrogen adsorption specific surface area (N₂SA) of the carbon black to less than 40 m²/g, the size of carbon black primary particles is increased, thereby realizing excellent low-heat generating properties. On the other hand, by increasing the oil absorption amount (COAN) of a compressed sample of the carbon black to 60 ml/100 g or more, it is possible to obtain highly structured carbon black with developed aggregates that are secondary particles, thereby contributing to the reinforcing properties of the rubber composition. Therefore, by using the above-described carbon black in the rubber composition of the present disclosure, it is possible to achieve both low heat generating properties, and high elastic modulus and crack growth resistance.

From the above viewpoint, the N₂SA of the carbon black is more preferably 35 m²/g or less and still more preferably 30 m²/g or less.

On the other hand, from the viewpoint of suppressing deterioration of crack growth resistance of the rubber composition, the N₂SA of the carbon black is preferably 22 m²/g or more.

Note that the nitrogen adsorption specific surface area (N₂SA) can be measured with the method specified in JIS K 6217-2: 2017 "Carbon Black for Rubber-Basic Characteristics-Part 2, How to Obtain Specific Surface Area-Nitrogen Adsorption Method, One-Point Method".

From the above viewpoint, the COAN of the carbon black is preferably 65 ml/100 g or more and more preferably 70 ml/100 g or more.

On the other hand, from the viewpoint of obtaining high-level reinforcing properties in the rubber composition, the COAN of the carbon black is preferably 100 ml/100 g or less, more preferably 85 ml/100 g or less, and still more preferably 75 ml/100 g or less.

Note that the oil absorption amount (COAN) of a compressed sample can be measured with a method specified in JIS K 6217-4: 2017 "Carbon Black for Rubber-Basic Characteristics-Part 4, How to Determine Oil Absorption Amount (Including Compressed Sample)".

The type of the carbon black is not particularly limited except that it has the N₂SA and COAN described above. For example, any hard carbon produced with an oil furnace method can be used. Among these, from the viewpoint of realizing better low heat generating properties and wear resistance, it is preferable to use SRF, GPF, FEF grade carbon black.

These carbon blacks may be used alone or in combination of two or more.

The content of the carbon black in the rubber composition of the present disclosure is 35 parts by mass or more and less than 45 parts by mass with respect to 100 parts by mass of the rubber component. By containing 35 parts by mass or more of the carbon black with respect to 100 parts by mass of the rubber component, the effect of improving the reinforcing properties and the elastic modulus can be sufficiently obtained. At the same time, by containing less than 45 parts by mass of the carbon black with respect to 100 parts by mass of the rubber component, it is possible to suppress deterioration of low heat generating properties due to an excessive amount of carbon black.

### (Other components)

In the rubber composition of the present disclosure, other components can be appropriately selected and blended according to the purpose or necessity in addition to the above-described components, as long as the effects of the present disclosure are not impaired. Examples of the other components include additives such as an inorganic filler, zinc oxide, a softener, a tackifier, a dispersant, a cross-linking agent, a cross-linking accelerator, a cross-linking aid, a stearic acid, an age resistor, an antioxidant, an antiozonant, a colorant, an antistatic agent and a lubricant, and various known combination chemicals commonly used in the rubber industry. These components may be commercially available products.

Examples of the inorganic filler include aluminum hydroxide and clay. Among these inorganic fillers, aluminum hydroxide and the like are preferable because they have relatively high reinforcing properties, and clay and the like are effective because of the effects caused their shape characteristics.

Further, the rubber composition of the present disclosure preferably contains no silica as a filler from the viewpoint of further improving the crack growth resistance and processability.

The rubber composition of the present disclosure preferably contains zinc oxide (ZnO) as a cross-linking accelerating aid. This is because the heat aging resistance and the high elastic modulus properties can be further improved by containing ZnO. However, when the content of ZnO is too large, the crack growth properties may deteriorate. Therefore, the content is preferably less than 5 parts by mass with respect to 100 parts by mass of the rubber component.

The softener is not particularly limited and may be appropriately selected according to the purpose. Examples thereof include naphthenic base oil, paraffinic base oil, and aromatic base oil. The content of the softener is preferably 2 parts by mass to 30 parts by mass with respect to 100 parts by mass of the rubber component. When the content of the softener exceeds 30 parts by mass with respect to 100 parts by mass of the rubber component, the softener may exude to the surface of a rubber product, or the wear resistance may deteriorate.

Among the above softeners, it is preferable to use a naphthenic base oil or a paraffinic base oil, and it is most preferable to use a naphthenic base oil. This is because an aroma oil has a large amount of aromatic component, so that it has a high affinity with the chemical, which is an aromatic compound, and further inhibits the reaction with a polymer, which is not preferable. On the other hand, this is because a naphthenic base oil or a paraffinic base oil has the effect of promoting diffusion and reaction in a polymer, and oils with a low pour point diffuse easily into a polymer.

The classification of the naphthenic base oil, the paraffinic base oil, and the aromatic base oil is determined by the CA value, the CP value, and the CN value. For example, TDAE, SRAE, RAE, and black oil are classified into the naphthenic base oil, and a spindle oil and a paraffin oil are classified into the paraffinic base oil.

A mixed oil such as A/O Mix (SANKYO YUKA KOGYO K.K.), which is a mixture of the naphthenic base oil and the naphthenic asphalt, can produce a better effect.

The timing of blending these lubrication oils is not particularly limited, and, for example, they may be blended by oil extension during the production of the rubber component or may be added during the kneading of the rubber composition.

The cross-linking agent is not particularly limited, and examples thereof include sulfur.

A known cross-linking accelerator may be used, which is not particularly limited. Examples thereof include a thiazole-based vulcanization accelerator such as 2-mercaptobenzothiazole, and dibenzothiazyl disulfide; a sulfenamide-based vulcanization accelerator such as N-cyclohexyl-2-benzothiazyl sulfenamide, and N-t-butyl-2-benzothiazyl sulfenamide; a guanidine-based vulcanization accelerator such as diphenylguanidine; a thiuram-based vulcanization accelerator such as tetramethyl thiuram disulfide, tetraethyl thiuram disulfide, tetrabutyl thiuram disulfide, tetradodecyl thiuram disulfide, tetraoctyl thiuram disulfide, tetrabenzyl thiuram disulfide, and dipentamethylene thiuram tetrasulfide; a dithiocarbamate-based vulcanization accelerator such as zinc dimethyldithiocarbamate; and zinc dialkyldithiophosphate.

A known age resistor may be used, which is not particularly limited. Examples thereof include a phenol-based age resistor, an imidazole-based age resistor, and amine-based age resistor. These age resistors may be used alone or in combination of two or more.

### (Production of rubber composition)

The rubber composition of the present disclosure can be produced by blending the carbon black, the bismaleimide compound and the hydrazide compound with the rubber component, further adding zinc oxide, a stearic acid, an age resistor, sulfur, a vulcanization accelerator, a carbon black dispersant, or other additives appropriately selected according to the purpose or necessity, and performing kneading, then extrusion or rolling, and then vulcanization.

The kneading conditions are not particularly limited, and various conditions, such as the input volume of a kneading device, the rotation speed of a rotor, the ram pressure, and the kneading temperature, kneading time and type of a kneading device, can be appropriately selected according to the purpose. Examples of the kneading device include a Banbury mixer, an intermixer, a kneader and a roller that are usually used for the kneading of a rubber composition.

The warming conditions are not particularly limited, and various conditions, such as the warming temperature, warming time and warming device, can be appropriately selected according to the purpose.

Examples of the warming device include a warming roller machine that is usually used for the warming of a rubber composition.

The extrusion conditions are not particularly limited, and various conditions, such as the extrusion time, extrusion speed, extrusion device and extrusion temperature, can be appropriately selected according to the purpose. Examples of the extrusion device include an extruder that is usually used for the extrusion of a rubber composition for tire. The extrusion temperature can be determined as appropriate.

The device, method, conditions and the like for performing the vulcanization are not particularly limited and can be appropriately selected according to the purpose. Examples of the device for vulcanization include a molding vulcanizer using a mold that is usually used for the vulcanization of a rubber composition for tire. Regarding the conditions of the vulcanization, the temperature may be, for example, about 100 °C to 190 °C.

### <Tire>

The tire of the present disclosure uses the rubber composition of the present disclosure described above. By containing the rubber composition of the present disclosure as a tire material, the high elastic modulus properties and the crack growth resistance can be improved, and the rolling resistance can be reduced.

The tire of the present disclosure is not particularly limited except that the rubber composition of the present disclosure described above is used for any of the tire members, and the tire can be produced according to a conventional method.

A gas to be filled in the tire may be normal air or air whose oxygen partial pressure has been adjusted, or an inert gas such as nitrogen, argon or helium.

The tire of the present disclosure uses the rubber composition of the present disclosure described above for any of the tire members, where, among the tire members, it is preferable to use the rubber composition for at least one member selected from ply coating rubber, inter-ply rubber, belt coating rubber, inter-belt cushion rubber, belt end covering rubber, and stiffener rubber. This is because, when the rubber composition is applied to these members, the benefits of the rubber composition of the present disclosure for improving high elastic modulus properties and crack growth resistance and reducing rolling resistance can be sufficiently obtained.

### EXAMPLES

The following describes the present disclosure in more detail with reference to examples.

### <Samples 1 to 15>

Rubber composition samples were prepared by blending each component according to the composition listed in Table 1 and kneading the components with a Banbury mixer.

### <Evaluation>

Each of the obtained rubber composition samples was extruded into a sheet shape and then subjected to vulcanization at a temperature of 145 °C for 1.5 times the time (T90) until an increase in torque caused by the vulcanization reaction reached 90 % of the total to prepare a vulcanized rubber sample for physical property measurement.

The obtained vulcanized rubber sample was evaluated as follows.

### (1) Tan δ (low heat generating property)

The loss tangent (tan δ) of the vulcanized rubber sample obtained from each rubber composition sample was measured using a spectrometer (manufactured by Ueshima Seisakusho Co., Ltd.) under the conditions of a temperature of 25 °C, an initial load of 1600 mN, dynamic strain of 2 %, and a frequency of 52 Hz.

The evaluation result is indicated by an index with the tan δ of Sample 1 as a comparative example being 100, and the smaller the index value is, the better the low heat generating properties are. The evaluation results are listed in Table 1.

### (2) Crack growth resistance

The vulcanized rubber sample obtained from each rubber composition sample was repeatedly pulled with a force of 1.1 N stress using a tensile test device (manufactured by Shimadzu Corporation), and the number of times of pulling until the sample broke was measured.

The common logarithm (log) of the measured number of times of pulling until the sample broke was calculated, and the evaluation result was indicated by an index with the logarithm of the reference example being 100. The larger the index value is, the larger the tearing strength is, the better the crack growth resistance is. The evaluation results are listed in Table 1. Because the index of the reference example is given as a reference value for easy comparison, the crack growth resistance index of each sample is regarded at the same level as long as it is 98 or more, even if the index is less than 100.

### (3) 300 % Modulus

The vulcanized rubber sample obtained from each rubber composition sample was made into a sample with a method according to JIS-K-6299 and JIS-K-6250 and then subjected to a tensile test using a tensile tester (STROGRAPH manufactured by Toyo Seiki Seisaku-sho, Ltd.) at a speed of 500 mm/min in accordance with JIS-K-6252 to measure the 300 % modulus. The evaluation results are listed in Table 1.

The evaluation result is indicated by an index with the 300 % modulus of the reference example being 100. The closer the index is to 100, the more appropriate the modulus is as a rubber composition for tire.

### (4) Storage modulus (E1)

The storage modulus E1' (MPa) of the vulcanized rubber sample obtained from each rubber composition sample was measured using a spectrometer (manufactured by Ueshima Seisakusho Co., Ltd.) under the conditions of a temperature of 25 °C, an initial load of 1600 mN, dynamic strain of 2 %, and a frequency of 52 Hz. With the result of the reference example being 100, the indexes are listed in Table 1.

The closer the index is to 100, the more appropriate the modulus is as a rubber composition for tire. The evaluation results are listed in Table 1.

**Table 1**

| | | 1 | 2 | 3 | 4 | 5 | 6 | 8 | 10 | 11 | 12 | 13 | 14 | 15 |
|---|---|---|---|---|---|---|---|---|---|---|---|---|---|---|
| | | Reference Example | Comparative Example | Comparative Example | Comparative Example | Comparative Example | Comparative Example | Comparative Example | Example | Example | Example | Comparative Example | Example | Comparative Example |
| Component (Part by mass) | Natural rubber | 85 | 100 | 100 | 100 | 100 | 100 | 100 | 100 | 100 | 100 | 100 | 100 | 100 |
| | Isoprene rubber | 15 | - | - | - | - | - | - | - | - | - | - | - | - |
| | Carbon black 1 *1 | - | - | 30 | 37 | 37 | 37 | 37 | 37 | 37 | - | - | 40 | 45 |
| | Carbon black 2 *2 | 30 | 30 | - | - | - | - | - | - | - | - | - | - | - |
| | Carbon black 3 *3 | - | - | - | - | - | - | - | - | - | 35 | - | - | - |
| | Carbon black 4 *4 | - | - | - | - | - | - | - | - | - | - | 35 | - | - |
| | ZnO | 3.5 | 3.5 | 3.5 | 3.5 | 3.5 | 3.5 | 3.5 | 3.5 | 3.5 | 3.5 | 3.5 | 3.5 | 3.5 |
| | Hydrazide compound *5 | - | - | - | - | 0.5 | 1 | 1 | 1 | 1 | 1 | 1 | 1 | 1 |
| | Bismaleimide compound *6 | - | - | - | - | - | - | 1 | 0.5 | 0.75 | 0.5 | 0.5 | 0.5 | 0.5 |
| | Sulfur *7 | 3.75 | 3.75 | 3.75 | 3.75 | 3.75 | 3.75 | 3.75 | 3.75 | 3.75 | 3.75 | 3.75 | 3.75 | 3.75 |
| | Vulcanization accelerator *8 | 0.65 | 0.65 | 0.65 | 0.65 | 0.65 | 0.65 | 0.65 | 0.65 | 0.65 | 0.65 | 0.65 | 0.65 | 0.65 |
| Evaluation result | Low heat generating property (index) | 100 | 89 | 53 | 70 | 57 | 64 | 62 | 54 | 58 | 59 | 69 | 61 | 65 |
| | Crack growth resistance (index) | 100 | 99 | 97 | 98 | 98 | 100 | 102 | 101 | 101 | 99 | 99 | 99 | 99 |
| | 300% Modulus (index) | 100 | 86 | 74 | 95 | 97 | 87 | 103 | 104 | 104 | 104 | 98 | 107 | 119 |
| | Storage modulus E1 (index) | 100 | 88 | 68 | 84 | 86 | 98 | 112 | 97 | 101 | 104 | 115 | 99 | 114 |

| | | | | | | | | | | | | | | |
|---|---|---|---|---|---|---|---|---|---|---|---|---|---|---|
| *1 Carbon black with N₂SA of 26 m²/g and COAN of 70 ml/100g *2 Carbon black with N₂SA of 69 m²/g and COAN of 87 ml/100g *3 Carbon black with N₂SA of 35 m²/g and COAN of 74 ml/100g *4 Carbon black with N₂SA of 40 m²/g and COAN of 83 ml/100g *5 3-Hydroxy-N'-(1,3-dimethylbutylidene)-2-naphthoic acid hydrazide manufactured by Otsuka Chemical Co., Ltd. *6 N,N'-(4,4'-diphenylmethane) bismaleimide manufactured by Mitsui Chemicals Co., Ltd. *7 "MUCRON OT-20" manufactured by SHIKOKU CHEMICALS CORPORATION *8 N-t-butyl-2-benzothiazolyl sulfenamide, "NOCCELER NS-P" manufactured by Ouchi Shinko Chemical Industrial Co., Ltd. | | | | | | | | | | | | | | |

From Table 1, it is understood that each rubber composition sample of Examples was excellent in terms of low heat generating property, crack resistance and elastic modulus in a well-balanced manner.

### INDUSTRIAL APPLICABILITY

According to the present disclosure, it is possible to provide a rubber composition that has high elastic modulus and excellent crack growth resistance while achieving low heat generating properties. Further, according to the present disclosure, it is possible to provide a tire with high elastic modulus, excellent crack growth resistance, and reduced rolling resistance.

## Claims

1. A rubber composition, comprising a rubber component, carbon black, a bismaleimide compound, and a hydrazide compound, wherein
the bismaleimide compound is represented by the following general formula (I), and a content of the bismaleimide compound is more than 0 parts by mass and less than 1 part by mass with respect to 100 parts by mass of the rubber component, 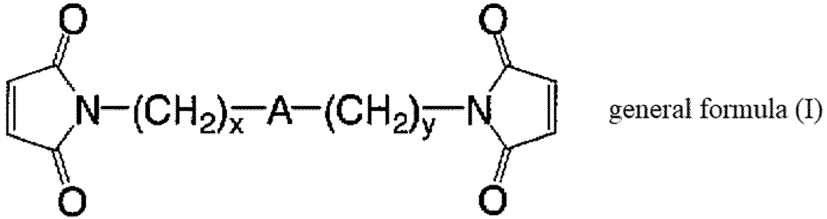 where in the general formula (I), A represents a divalent aromatic group having 6 to 18 carbon atoms or a divalent alkyl aromatic group having 7 to 24 carbon atoms, and x and y each independently represent an integer of 0 to 3,
the hydrazide compound is represented by the following general formula (II), and a content of the hydrazide compound is 0.5 parts by mass or more with respect to 100 parts by mass of the rubber component, 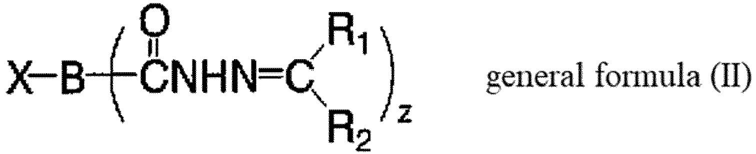 where in the general formula (II), B represents a polyvalent acyclic aliphatic group having 2 to 18 carbon atoms where the functional group may contain an aromatic group therein, a polyvalent cyclic aliphatic group having 5 to 20 carbon atoms, a polyvalent aromatic group having 6 to 18 carbon atoms, or a polyvalent alkyl aromatic group having 7 to 24 carbon atoms, where the functional group may contain at least one type of heteroatom selected from an oxygen atom, a nitrogen atom, and a sulfur atom; X represents a hydrogen atom, a hydroxy group, an amino group, or a mercapto group; R₁ and R₂ each independently represent a hydrogen atom, an alkyl group having 1 to 18 carbon atoms, a cycloalkyl group, or an aromatic ring, where the substituent may contain at least one type of heteroatom selected from an oxygen atom, a nitrogen atom, and a sulfur atom; and z represents an integer of 1 to 3, and
the carbon black has a nitrogen adsorption specific surface area (N₂SA) of less than 40 m²/g as measured with the method specified in JIS K 6217-2: 2017 and an oil absorption amount (COAN) of a compressed sample of 60 ml/100 g or more as measured with a method specified in JIS K 6217-4: 2017, and a content of the carbon black is 35 parts by mass or more and less than 45 parts by mass with respect to 100 parts by mass of the rubber component.

2. The rubber composition according to claim 1, wherein the hydrazide compound is 3-hydroxy-N'-(1,3-dimethylbutylidene)-2-naphthoic acid hydrazide.

3. The rubber composition according to claim 1 or 2, wherein the bismaleimide compound is at least one selected from N,N'-1,2-phenylene bismaleimide, N,N'-1,3-phenylene bismaleimide, and N,N'-1,4-phenylene bismaleimide.

4. The rubber composition according to any one of claims 1 to 3, wherein the rubber component comprises 90 % by mass or more of natural rubber.

5. The rubber composition according to any one of claims 1 to 4, wherein the rubber composition comprises no silica as a filler.

6. The rubber composition according to any one of claims 1 to 5, further comprising zinc oxide, which is expressed as ZnO, in an amount of less than 5 parts by mass with respect to 100 parts by mass of the rubber component.

7. A tire using the rubber composition according to any one of claims 1 to 6.

8. The tire according to claim 7, using the rubber composition for at least one member selected from ply coating rubber, inter-ply rubber, belt coating rubber, inter-belt cushion rubber, belt end covering rubber, and stiffener rubber.

## Patentansprüche

1. Kautschukzusammensetzung, umfassend eine Kautschukkomponente, Ruß, eine Bismaleimidverbindung und eine Hydrazidverbindung, wobei
die Bismaleimidverbindung durch die folgende allgemeine Formel (I) dargestellt wird und ein Gehalt der Bismaleimidverbindung mehr als 0 Massenteile und weniger als 1 Massenteil, in Bezug auf 100 Massenteile der Kautschukkomponente beträgt, 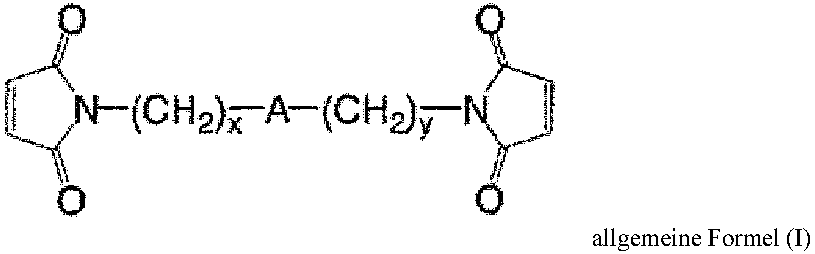
worin in der allgemeinen Formel (I) A eine zweiwertige aromatische Gruppe mit 6 bis 18 Kohlenstoffatomen oder eine zweiwertige alkylaromatische Gruppe mit 7 bis 24 Kohlenstoffatomen darstellt, und x und y jeweils unabhängig eine ganze Zahl von 0 bis 3 darstellen,
die Hydrazidverbindung durch die folgende allgemeine Formel (II) dargestellt wird, und ein Gehalt der Hydrazidverbindung 0,5 Massenteile oder mehr, in Bezug auf 100 Massenteile der Kautschukkomponente, beträgt, 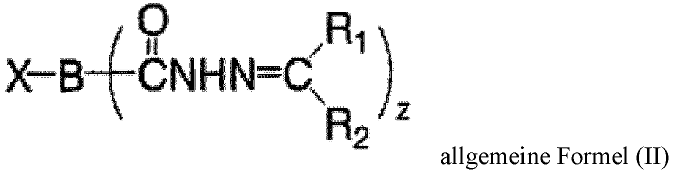
worin in der allgemeinen Formel (II) B eine mehrwertige acyclische aliphatische Gruppe mit 2 bis 18 Kohlenstoffatomen, worin die funktionelle Gruppe eine aromatische Gruppe darin enthalten kann, eine mehrwertige cyclische aliphatische Gruppe mit 5 bis 20 Kohlenstoffatomen, eine mehrwertige aromatische Gruppe mit 6 bis 18 Kohlenstoffatomen oder eine mehrwertige alkylaromatische Gruppe mit 7 bis 24 Kohlenstoffatomen darstellt, worin die funktionelle Gruppe mindestens eine Art von Heteroatom, ausgewählt aus einem Sauerstoffatom, einem Stickstoffatom und einem Schwefelatom, enthalten kann; X ein Wasserstoffatom, eine Hydroxygruppe, eine Aminogruppe oder eine Mercaptogruppe darstellt; R₁ und R₂ jeweils unabhängig ein Wasserstoffatom, eine Alkylgruppe mit 1 bis 18 Kohlenstoffatomen, eine Cycloalkylgruppe oder einen aromatischen Ring darstellen, worin der Substituent mindestens eine Art von Heteroatom, ausgewählt aus einem Sauerstoffatom, einem Stickstoffatom und einem Schwefelatom, enthalten kann; und z eine ganze Zahl von 1 bis 3 darstellt, und
der Ruß eine spezifische Stickstoffadsorptionsoberfläche (N₂SA) von weniger als 40 m²/g, wie gemessen mit dem in JIS K 6217-2: 2017 vorgegebenen Verfahren, und eine Ölabsorptionsmenge (COAN) einer komprimierten Probe von 60 ml/100 g oder mehr, wie gemessen mit einem in JIS K 6217-4: 2017 vorgegebenen Verfahren, aufweist und ein Gehalt des Rußes 35 Massenteile oder mehr und weniger als 45 Massenteile, in Bezug auf 100 Massenteile der Kautschukkomponente, beträgt.

2. Kautschukzusammensetzung nach Anspruch 1, wobei die Hydrazidverbindung 3-Hydroxy-N`-(1,3-dimethylbutyliden)-2-naphthoesäurehydrazid ist.

3. Kautschukzusammensetzung nach Anspruch 1 oder 2, wobei die Bismaleimidverbindung mindestens eines ist, ausgewählt aus N,N`-1,2-Phenylenbismaleimid, N,N'-1,3-Phenylenbismaleimid und N,N'-1,4-Phenylenbismaleimid.

4. Kautschukzusammensetzung nach einem der Ansprüche 1 bis 3, wobei die Kautschukkomponente 90 Massenprozent oder mehr Naturkautschuk umfasst.

5. Kautschukzusammensetzung nach einem der Ansprüche 1 bis 4, wobei die Kautschukzusammensetzung kein Siliziumdioxid als Füllstoff umfasst.

6. Kautschukzusammensetzung nach einem der Ansprüche 1 bis 5, die ferner Zinkoxid, ausgedrückt als ZnO, in einer Menge von weniger als 5 Massenteilen, in Bezug auf 100 Massenteile der Kautschukkomponente, umfasst.

7. Reifen, der die Kautschukzusammensetzung nach einem der Ansprüche 1 bis 6 verwendet.

8. Reifen nach Anspruch 7, der die Kautschukzusammensetzung für mindestens ein Element, ausgewählt aus Lagenbeschichtungskautschuk, Zwischenlagenkautschuk, Gürtelbeschichtungskautschuk, Zwischengürtelkissenkautschuk, Gürtelendabdeckungskautschuk und Versteifungskautschuk verwendet.

## Revendications

1. Composition de caoutchouc, comprenant un composant en caoutchouc, du noir de carbone, un composé bismaléimide et un composé hydrazide, dans laquelle
le composé bismaléimide est représenté par la formule générale (I) suivante, et une teneur du composé bismaléimide est supérieure à 0 partie en masse et inférieure à 1 partie en masse par rapport à 100 parties en masse du composant en caoutchouc, 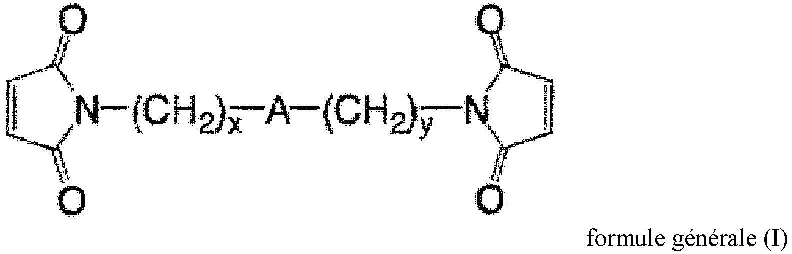
où dans la formule générale (I), A représente un groupe aromatique divalent ayant 6 à 18 atomes de carbone ou un groupe aromatique alkyle divalent ayant 7 à 24 atomes de carbone, et x et y représentent chacun indépendamment un entier de 0 à 3,
le composé hydrazide est représenté par la formule générale (II) suivante, et une teneur du composé hydrazide est de 0,5 partie en masse ou plus par rapport à 100 parties en masse du composant en caoutchouc, 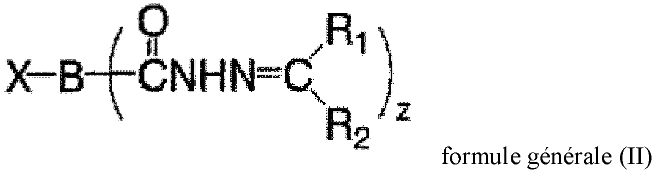
où dans la formule générale (II), B représente un groupe aliphatique acyclique polyvalent ayant 2 à 18 atomes de carbone où le groupe fonctionnel peut contenir un groupe aromatique au sein de celui-ci, un groupe aliphatique cyclique polyvalent ayant 5 à 20 atomes de carbone, un groupe aromatique polyvalent ayant 6 à 18 atomes de carbone, ou un groupe aromatique alkyle polyvalent ayant 7 à 24 atomes de carbone, où le groupe fonctionnel peut contenir au moins un type d'hétéroatome sélectionné parmi un atome d'oxygène, un atome d'azote et un atome de soufre ; X représente un atome d'hydrogène, un groupe hydroxy, un groupe amino ou un groupe mercapto ; R₁ et R₂ représentent chacun indépendamment un atome d'hydrogène, un groupe alkyle ayant 1 à 18 atomes de carbone, un groupe cycloalkyle ou un cycle aromatique, où le substituant peut contenir au moins un type d'hétéroatome sélectionné parmi un atome d'oxygène, un atome d'azote et un atome de soufre ; et z représente un nombre entier de 1 à 3, et
le noir de carbone a une surface spécifique d'adsorption d'azote (N₂SA) inférieure à 40 m²/g telle que mesurée avec le procédé précisé dans JIS K 6217-2 : 2017 et une quantité d'absorption d'huile (COAN) d'un échantillon comprimé de 60 ml/100 g ou plus telle que mesurée avec un procédé précisé dans JIS K 6217-4 : 2017, et une teneur du noir de carbone est de 35 parties en masse ou plus et inférieure à 45 parties en masse par rapport à 100 parties en masse du composant en caoutchouc.

2. Composition de caoutchouc selon la revendication 1, dans laquelle le composé hydrazide est l'hydrazide d'acide 3-hydroxy-N'-(1,3-diméthylbutylidène)-2-naphtoïque.

3. Composition de caoutchouc selon la revendication 1 ou 2, dans laquelle le composé bismaléimide est au moins un sélectionné parmi le bismaléimide de N,N'-1,2-phénylène, le bismaléimide de N,N'-1,3-phénylène et le bismaléimide de N,N'-1,4-phénylène.

4. Composition de caoutchouc selon l'une quelconque des revendications 1 à 3, dans laquelle le composant en caoutchouc comprend 90 % en masse ou plus de caoutchouc naturel.

5. Composition de caoutchouc selon l'une quelconque des revendications 1 à 4, où la composition de caoutchouc ne comprend pas de silice en tant que matière de remplissage.

6. Composition de caoutchouc selon l'une quelconque des revendications 1 à 5, comprenant en outre de l'oxyde de zinc, qui est exprimé en tant que ZnO, en une quantité inférieure à 5 parties en masse par rapport à 100 parties en masse du composant en caoutchouc.

7. Pneu utilisant la composition de caoutchouc selon l'une quelconque des revendications 1 à 6.

8. Pneu selon la revendication 7, utilisant la composition de caoutchouc pour au moins un élément sélectionné parmi le caoutchouc de revêtement de pli, le caoutchouc inter-pli, le caoutchouc de revêtement de courroie, le caoutchouc de coussin inter-courroie, le caoutchouc de couverture d'extrémité de courroie et le caoutchouc raidisseur.
